# EUROPEAN PATENT SPECIFICATION

(11) **EP 2 830 186 B1**
(45) Date of publication and mention of the grant of the patent: **06.12.2017**
(21) Application number: 14178108.8
(22) Date of filing: 23.07.2014
(51) Int. Cl.: H01M 10/42, H01M 10/615, H01M 10/657, H02J 7/00

(54) **Battery heater systems and methods**
Batterieheizersysteme und Verfahren
Systèmes et procédés de chauffage de batterie

(30) Priority: 26.07.2013 US 201313951979
(43) Date of publication of application: 28.01.2015
(73) Proprietor: General Electric Company, Schenectady, NY 12345 (US)
(72) Inventor: Bourgeois, Richard Scott, Schenectady, NY 12345 (US); Zhu, Huibin, Schenectady, NY 12345 (US)
(74) Representative: Illingworth-Law, William Illingworth

(56) References cited:
- WO-A1-99/31752
- WO-A1-2012/141022
- DE-A1- 4 216 020
- US-A- 4 025 861
- US-A- 6 002 240

## Description

Embodiments of the subject matter disclosed herein relate to systems employing battery modules that are heated, and associated heater power supplies and methods of providing power for heating battery modules.

In various types of battery back-up systems, a sodium-based battery module operates at high temperatures and uses an electric heater system to keep the electro-chemical cells of the battery module within a well regulated temperature range. AC heater circuits use electric power from an AC grid, and DC heater circuits use power drawn from a DC bus. Systems with DC heater circuits can ride through AC grid outages and faults. However, in such systems, start-up issues can exist. Some systems do not include inverters with a pre-charge circuit to ramp up the DC bus from the AC grid energy at start-up. Instead, the inverters depend on a battery pack to charge up the DC bus at start-up. Such systems can become locked out during start-up and require an external battery pack to jump start the DC bus. Some systems use an AC heater circuit to attempt to solve the AC grid outage problem. An inverter is used to convert battery energy back into the AC grid to ride through the AC grid outage. However, depending on the particular applications, the AC grid may be connected to the local grid and the battery module may not be able to support all of the local loads, thus causing the system to trip. Moreover, such an approach does not work in wind or solar renewable applications which typically require the inverters to support reactive power to the grid, and not operate in the voltage mode or the real power mode.

WO 2012/141022 describes a power storage device comprising a grid, a plurality of operation units, a shutoff detecting mechanism, a remaining capacity specifying section, a rank giving section, a selecting section, and a stand-alone operation executing section. The operation unit includes a sodium-sulfur battery, a parallel-in/off mechanism and a power consuming body electrically connected to the grid. The parallel-in/off mechanism switches between a state where the sodium-sulfur battery is paralleled in to the grid and a state where the sodium-sulfur battery is paralleled off from the grid. The shutoff detecting mechanism detects a power reception shutoff. The remaining capacity specifying section specifies an index of a remaining capacity of the sodium-sulfur battery belonging to each of the plurality of operation units. The specified index of the remaining capacity is referred to, and the rank giving section gives rank to each of the plurality of operation units. The rank becomes higher as the remaining capacity of the sodium-sulfur battery belonging to each of the plurality of operation units becomes greater.

When the shutoff detecting mechanism detects the power reception shutoff, the selecting section selects the operation unit. The selected operation unit is the operation unit of the highest rank. The stand-alone operation executing section controls the parallel-in/off mechanism, and executes a stand-alone operation when the power reception shutoff is detected. In the stand-alone operation, the parallel-in/off mechanism belonging to the selected operation unit parallels in the sodium-sulfur battery to the grid, and the parallel-in/off mechanism belonging to the not selected operation unit parallels off the sodium-sulfur battery from the grid.

It may be desirable to have a system and method that differs from those systems and methods that are currently available.

Embodiments of the present invention address the limitations discussed above associated with heating battery modules in various types of battery back-up systems. Aspects of the invention are disclosed in independent claim 1 and 11. Reference is made to the accompanying drawings in which particular embodiments and further benefits of the invention are illustrated as described in more detail in the description below, in which:
FIG. 1 is an illustration of a block diagram of an embodiment of a system for providing power to a heater of a battery module;
FIG. 2 is a more detailed illustration of a block diagram of the system of FIG. 1;
FIG. 3 is an electrical schematic illustration of the system of FIG. 1 and FIG. 2;
FIG. 4 is a flowchart of an embodiment of a method to provide power to a heater of at least one battery module;
FIG. 5 is an illustration of a block diagram of a first embodiment of a system providing power to a heater of each of a plurality of battery modules;
FIG. 6 is an illustration of a block diagram of a second embodiment of a system providing power to a heater of each of a plurality of battery modules;
FIG. 7 is an illustration of a block diagram of a third embodiment of a system providing power to a heater of each of a plurality of battery modules;
FIG. 8 is an illustration of a block diagram of a fourth embodiment of a system providing power to a heater of each of a plurality of battery modules;
FIG. 9 is an illustration of a block diagram of a fifth embodiment of a system providing power to a heater of each of a plurality of battery modules;
FIG. 10 is an illustration of a block diagram of a sixth embodiment of a system providing power to a heater of each of a plurality of battery modules;
FIG. 11 is an electrical schematic illustration of an embodiment of a system for providing power to heaters of a plurality of battery modules;
FIG. 12 is an electrical schematic illustration of a first alternate embodiment of a system for providing power to heaters of a plurality of battery modules;
FIG. 13 is an electrical schematic illustration of a second alternate embodiment of a system for providing power to heaters of a plurality of battery modules;
FIG. 14 is an electrical schematic illustration of a third alternate embodiment of a system for providing power to heaters of a plurality of battery modules;
FIG. 15 is an electrical schematic illustration of a fourth alternate embodiment of a system for providing power to heaters of a plurality of battery modules; and
FIG. 16 is an electrical schematic illustration of a fifth alternate embodiment of a system for providing power to heaters of a plurality of battery modules.

With reference to the drawings, like reference numerals designate identical or corresponding parts throughout the several views. However, the inclusion of like elements in different views does not mean a given embodiment necessarily includes such elements or that all embodiments of the invention include such elements.

The term "DC" refers to direct current and the term "AC" refers to alternating current. The terms "battery", "battery module", "battery power source", and "energy storage element" are used interchangeably herein, are all energy storage devices, and may or may not include some form of a battery management system (BMS), in accordance with various embodiments. A battery module may include a plurality of electrochemical cells (e.g., sodium-based electro-chemical cells) which need to be heated to a well regulated temperature range.

The term "component" as used herein can be defined as a portion of hardware, a portion of software, or a combination thereof. A portion of hardware can include at least a processor and a portion of memory, wherein the memory includes an instruction to execute. The term "circuit" as used herein refers to at least one component or combination of components (usually in reference to electrical components which may be programmable and/or non-programmable). The term "rectifier" or "rectifier circuit" as used herein refers to a circuit that converts an AC signal into a DC signal. The term "diode" as used herein refers to an electrical component that allows electrical current to flow in one direction.

"Software" or "computer program" as used herein includes, computer readable and/or executable instructions that cause a controller or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, an application, instructions stored in a memory, part of an operating system or other type of executable instructions. It will be appreciated by one of ordinary skill in the art that the form of software may be dependent on, for example, requirements of a desired application, the environment it runs on, and/or the desires of a designer/programmer or the like.

"Computer" or "processing element" or "computer device" as used herein includes, but may be not limited to, any programmed or programmable electronic device that may store, retrieve, and process data. "Non-transitory computer-readable media" include, but may not be limited to, a CD-ROM, a removable flash memory card, a hard disk drive, a magnetic tape, and a floppy disk. "Computer memory", as used herein, refers to a storage device configured to store digital data, information, or instructions which may be retrieved by a computer or processing element.

"Controller", as used herein, refers to the logic circuitry and/or processing elements and associated software or program involved in managing battery modules. The terms "signal", "data", and "information" may be used interchangeably herein and may refer to digital or analog forms. The term "communication device" as used herein may refer to any wired or wireless device (e.g., a computer modem) operable to receive and/or transmit signals, data, or information. "Battery Management System" as used herein refers to a controller that is configured to control one or more battery modules in a battery back-up system.

The term "AC grid" as used herein refers to refers to the alternating current electrical network providing 3-phase electrical power. The term "DC bus" as used herein refers to the positive and negative rails that carry DC electrical power in a battery back-up system.

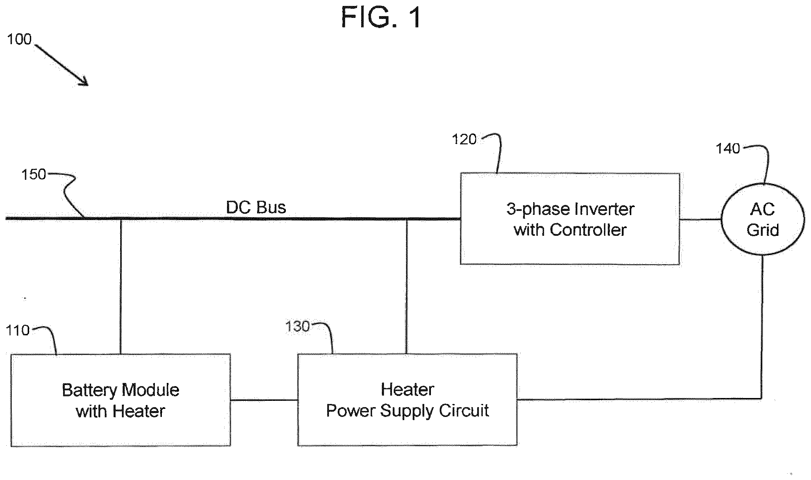

FIG. 1 is an illustration of a block diagram of an embodiment of a system 100 for providing power to a heater of a battery module 110. The system 100 includes a battery module 110 with a heater, a three-phase inverter with a controller 120, a heater power supply circuit 130, an alternating current (AC) grid 140, and a direct current (DC) bus 150. The AC grid 140 is operatively connected to the three-phase inverter with controller 120 and the heater power supply circuit 130. The DC bus 150 is operatively connected to the battery module with heater 110, the three-phase inverter with controller 120, and the heater power supply circuit 130.

In accordance with an embodiment, the battery module 110 includes electrochemical cells that have to be operated within a defined temperature range. The heater power supply circuit 130 provides DC electrical power to the heater within the battery module 110 to keep the electrochemical cells within the defined temperature range. The heater power supply circuit 130 may access electrical power from one of two sources including the AC grid 140 or the DC bus 150. Details of the conditions under which the heater power supply circuit 130 uses electrical power from the AC grid 140 or the DC bus 150 to provide DC power to the heater of the battery module 110 are described later herein.

In accordance with an embodiment, the battery module with heater 110 serves as a back-up source of DC power for a load that may be connected to the DC bus 150. For example, the load may be a set of telecommunications equipment at a cellular telephone cell tower site. During normal operation, the AC grid 140 provides electrical power for the load. The three-phase inverter with controller 120 converts the AC electrical power to DC electrical power and provides the DC electrical power to the DC bus to drive the load and/or to charge the battery module with heater 110. If the AC grid goes down and becomes unavailable, the battery module with heater 110 provides the DC electrical power to the DC bus to drive the load.

Furthermore, use of the AC grid 140 or the battery module with heater 110 to drive the load may be dependent on economic factors such as, for example, the cost of AC grid power at different times of day (e.g., peak usage times and non-peak usage times). Power from the AC grid 140 may be used to drive the load and charge the battery module 110 during non-peak times (when the cost of electricity from the AC grid is lower), and power from the battery module 110 may be used to drive the load during peak times (when the cost of electricity from the AC grid is higher).

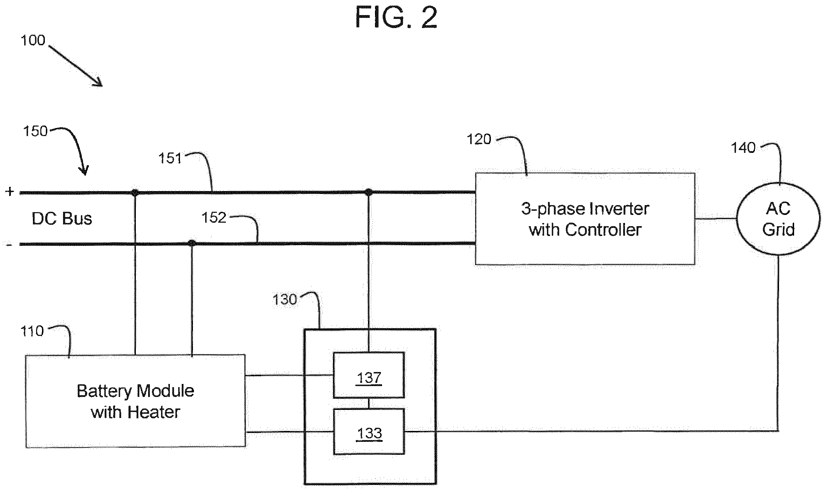

FIG. 2 is a more detailed illustration of a block diagram of the system 100 of FIG. 1. As shown in Fig. 2, the DC bus 150 includes a positive rail 151 and a negative rail 152. The battery module 110 is operatively connected to both the positive rail 151 and the negative rail 152. The heater power supply circuit 130 is operatively connected to the positive rail 151. Furthermore, the heater power supply circuit 130 includes a first circuit portion 133 operable to convert AC electrical power, provided by the AC grid 140, to a first DC electrical power. The heater power supply circuit also includes a second circuit portion 137 operable to output a second DC electrical power derived from the DC bus 150.

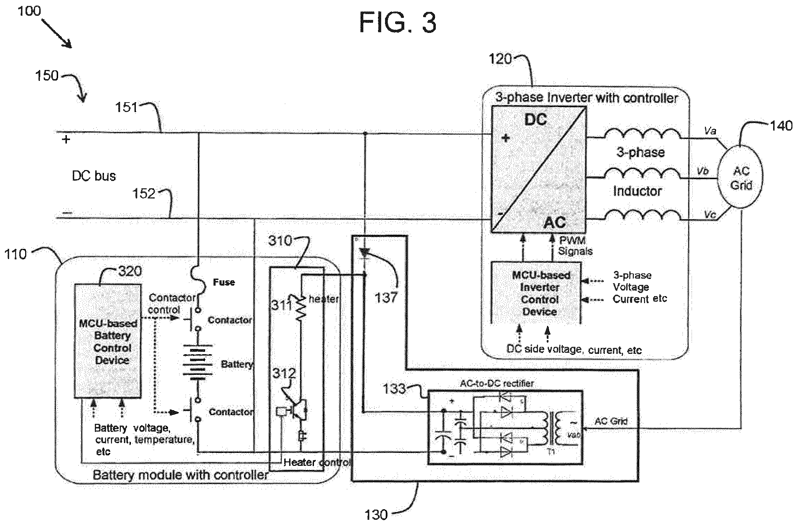

In accordance with an embodiment, the first circuit portion 133 and the second circuit portion 137 are operably connected and configured to provide either the first DC electrical power or the second DC electrical power to the heater circuit of the battery module 110 in dependence on a voltage level associated with the first circuit portion 133 relative to a voltage level associated with the second circuit portion 137, as is described in more detail with respect to FIG. 3.

FIG. 3 is an electrical schematic illustration of the system 100 of FIG. 1 and FIG. 2. FIG. 3 shows a heater 310 within the battery module 110. The heater 310 includes a resistive element 311 and a transistor switch 312 which is controlled by a controller 320 to turn the heater on and off (e.g., via pulse width modulation). As seen in FIG. 3, the first circuit portion 133 of the heater power supply circuit 130 is an AC-to-DC rectifier that converts AC electrical power from the AC grid 140 to DC electrical power. The second circuit portion 137 of the heater power supply circuit 130 is a diode connected to the positive rail 151 of the DC bus 150. The AC-to-DC rectifier 133 and the diode 137 are connected to each other and are also connected to the heater 310 to provide electrical power to the heater 310.

When the DC voltage level output by the AC-to-DC rectifier 133 is higher than the DC voltage level at the input (anode) of the diode 137 (as established by the voltage level on the positive rail 151), the diode 137 is reverse biased and, therefore, electrical current to the heater 310 is provided from the AC grid 140 via the AC-to-DC rectifier 133. When the DC voltage level output by the AC-to-DC rectifier 133 is lower than the DC voltage level at the input (anode) of the diode 137 (as established by the voltage level on the positive rail 151), the diode 137 is forward biased and, therefore, electrical current to the heater 310 is provided from the DC bus 150 via the diode 137. The DC bus 150 may be energized by the battery module 110 or by some other DC source connected to the DC bus 150.

In this manner, if the AC grid 140 is providing power to the heater 310 and then goes down (becomes unavailable), the heater power supply circuit 130 will automatically transition to supply power to the heater 310 from the DC bus 150 via the diode 137. The transition is automatic and seamless. In accordance with an embodiment, the first circuit portion 133 and the second circuit portion 137 of the heater power supply circuit 130 are non-programmable, analog circuit portions. No separate control circuitry, controller, or software control scheme is used to make the transition.

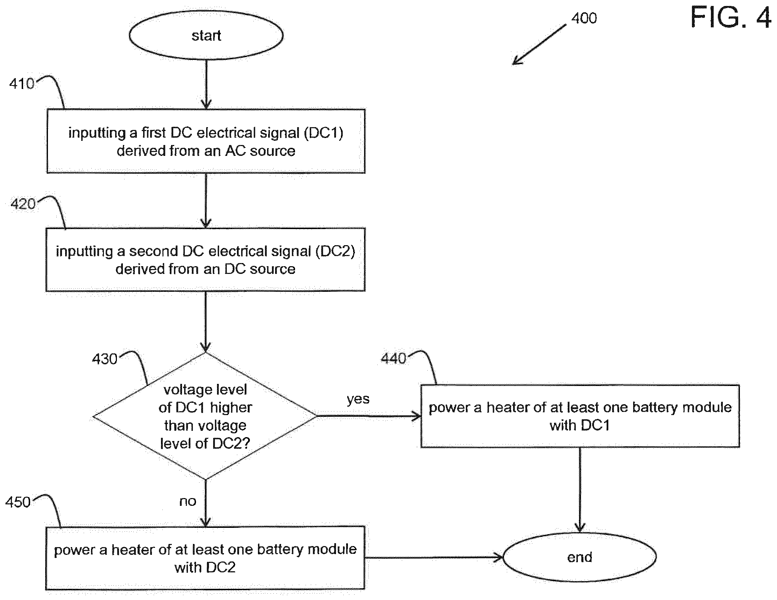

FIG. 4 is a flowchart of an embodiment of a method 400 to provide power to a heater of at least one battery module. In step 410 of the method, a first DC electrical signal (DC1) derived from an AC source is input. For example, DC1 may be derived from the AC grid 140 by the AC-to-DC rectifier 133. In step 420, a second DC electrical signal (DC2) derived from a DC source is input. For example, DC2 may be derived from the DC bus 150 by the diode 137. In step 430, if the voltage level of DC1 (e.g., at the output of the rectifier 133) is higher than the voltage level of DC2 (e.g., at the input of the diode 137) then, in step 440, a heater of at least one battery module is powered with DC1 derived from the AC source (e.g., because the diode 137 is reversed biased). Otherwise, a heater of at least one battery module is powered with DC2 derived from the DC source (e.g., because the diode 137 is forward biased).

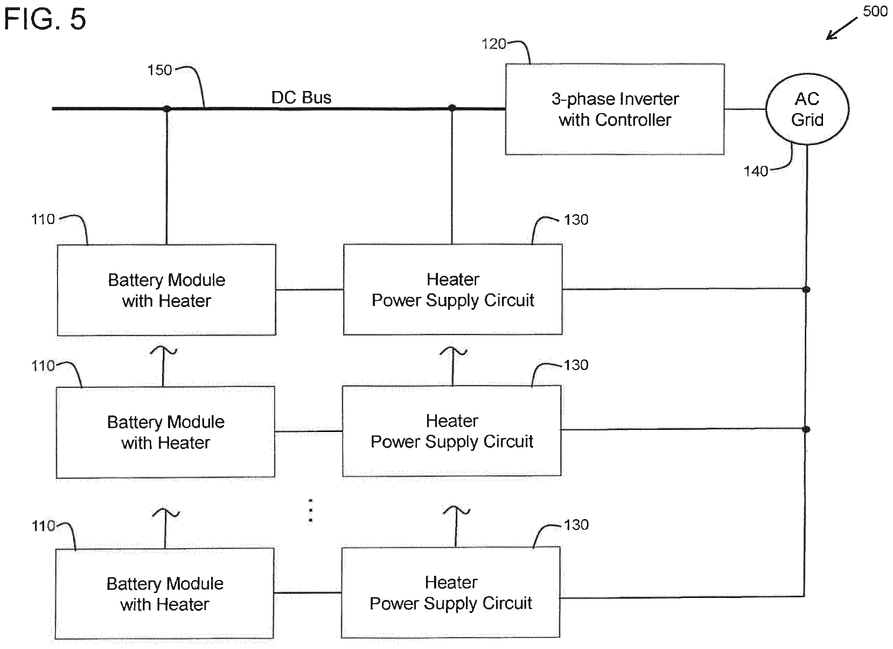

Many battery back-up systems use a plurality of battery modules to provide DC power to a load connected to a DC bus during peak times or when the AC grid (or some other AC source) is not available. Having more than one battery module provides redundancy and/or provides additional DC electrical power to drive one or more loads. FIGS. 5-16 illustrate various embodiments of systems providing a plurality of battery modules that are heated using the techniques described herein.

FIG. 5 is an illustration of a block diagram of a first embodiment of a system 500 providing power to a heater of each of a plurality of battery modules 110. Each battery module 110 is associated with and operatively connected to a dedicated heater power supply circuit 130, and is operatively connected to the DC bus 150. Each heater power supply circuit 130 is operatively connected to the AC grid 140 and the DC bus 150. The system 500 of FIG. 5 allows for the use of multiple pairs of battery modules 110 and heater power supply circuits 130.

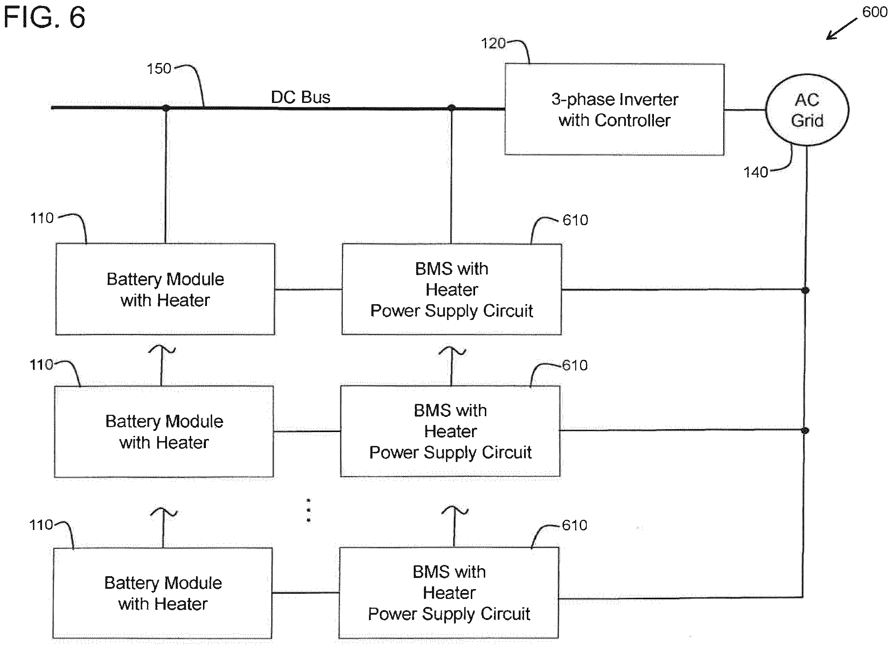

FIG. 6 is an illustration of a block diagram of a second embodiment of a system 600 providing power to a heater of each of a plurality of battery modules 110. Each battery module 110 is associated with and operatively connected to a dedicated battery management system (BMS) 610 having a heater power supply circuit 130, and is operatively connected to the DC bus 150. That is, a heater power supply circuit 130 is integrated into each of the BMS's 610. Each BMS 610 with heater power supply circuit 130 is operatively connected to the AC grid 140 and the DC bus 150. The system 600 of FIG. 6 allows for each battery module 110 to be controlled by a separate BMS 610.

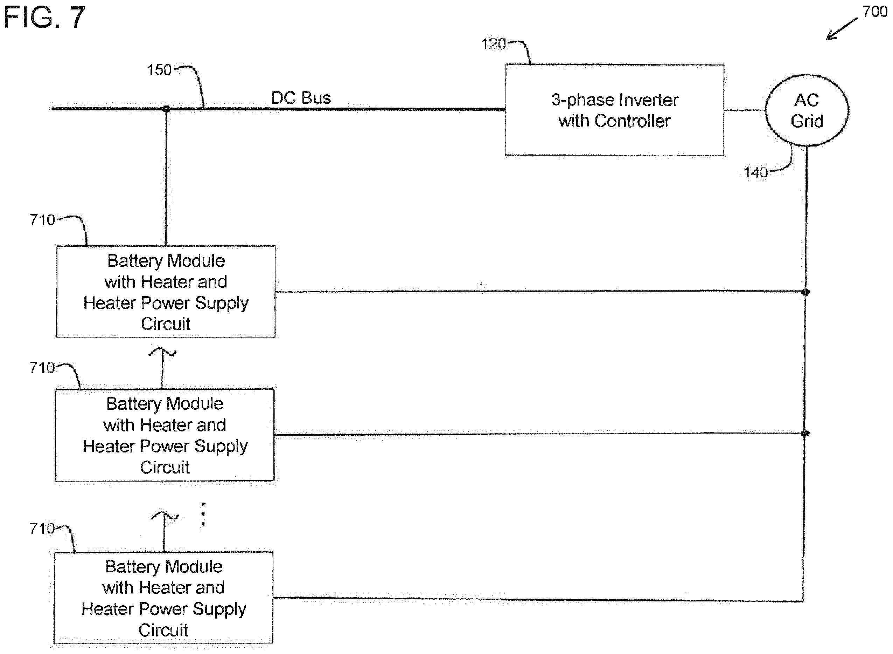

FIG. 7 is an illustration of a block diagram of a third embodiment of a system 700 providing power to a heater of each of a plurality of battery modules 710. Each battery module 710 includes an integrated heater power supply circuit 130 configured to provide electrical power to a heater within the battery module. Each battery module 710 is operatively connected to the AC grid 140 and the DC bus 150. The system 700 of FIG. 7 may save space and eliminate additional interconnects by integrating a heater power supply circuit 130 into each battery module 710.

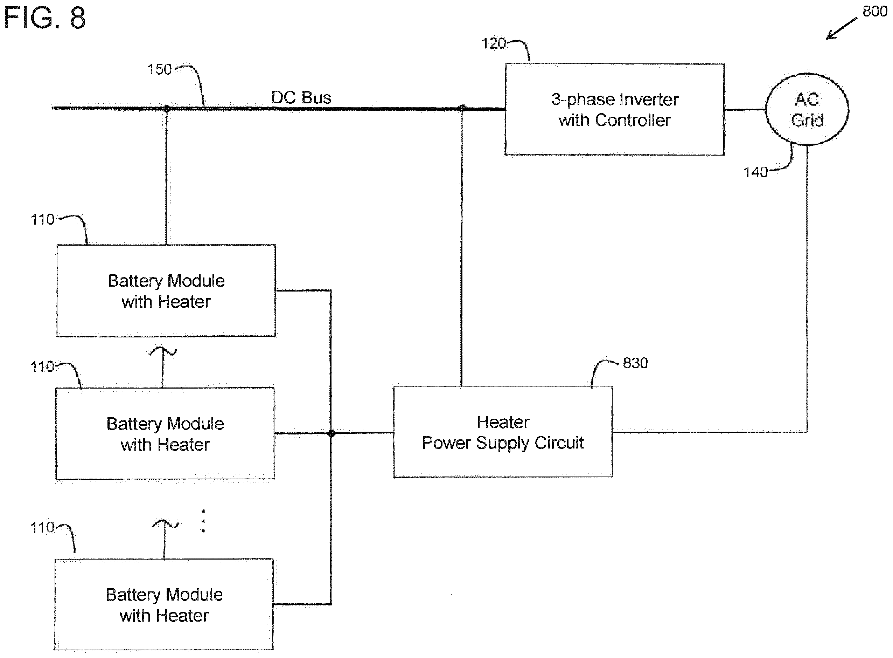

FIG. 8 is an illustration of a block diagram of a fourth embodiment of a system 800 providing power to a heater of each of a plurality of battery modules 110. The heaters of each of the battery modules 110 are driven by the same single heater power supply circuit 830. The single heater power supply circuit 830 is configured to be able to provide enough current for the heaters of all of the battery modules 110, simultaneously. For example, the single heater power supply circuit 830 may be very similar to the heater power supply circuit 130 but may have electrical components capable of handling higher current levels. The single heater power supply circuit 830 is operatively connected to the AC grid 140 and the DC bus 150. Each of the battery modules 110 are operatively connected to the DC bus and the single heater power supply circuit 830. The system 800 of Fig. 8 allows for a single heater power supply circuit 830 to accommodate more than one battery module 110.

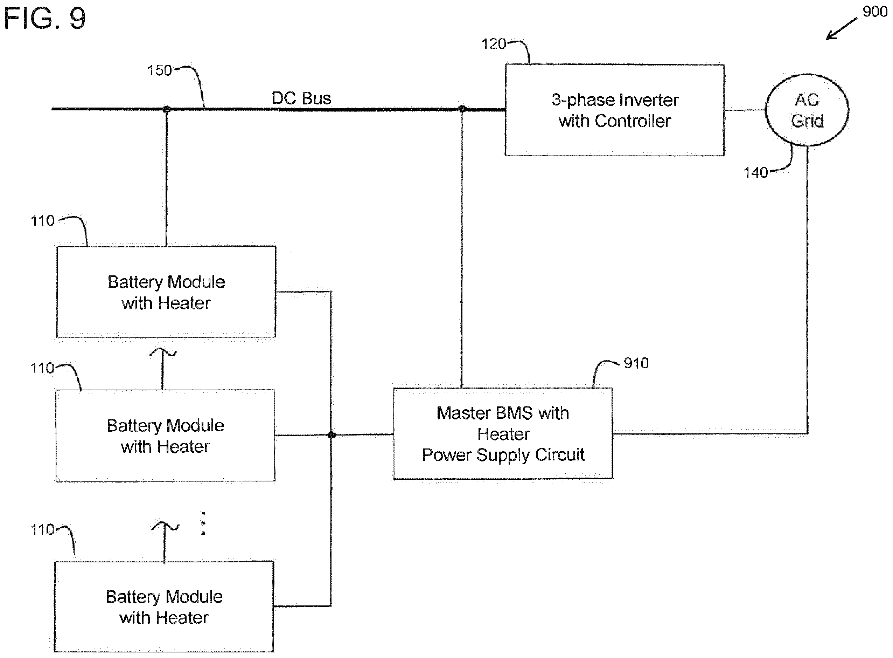

FIG. 9 is an illustration of a block diagram of a fifth embodiment of a system 900 providing power to a heater of each of a plurality of battery modules 110. The heaters of each of the battery modules 110 are driven by the same single heater power supply circuit which is integrated into a master BMS 910. The single heater power supply circuit within the master BMS 910 is configured to be able to provide enough current for the heaters of all of the battery modules 110, simultaneously. For example, the single heater power supply circuit of the master BMS 910 may be very similar to the heater power supply circuit 130 but may have electrical components capable of handling higher current levels. The master BMS 910 is operatively connected to the AC grid 140 and the DC bus 150. Each of the battery modules 110 are operatively connected to the DC bus and the master BMS 910. The system 900 of Fig. 9 allows for a master BMS 910 to accommodate more than one battery module 110.

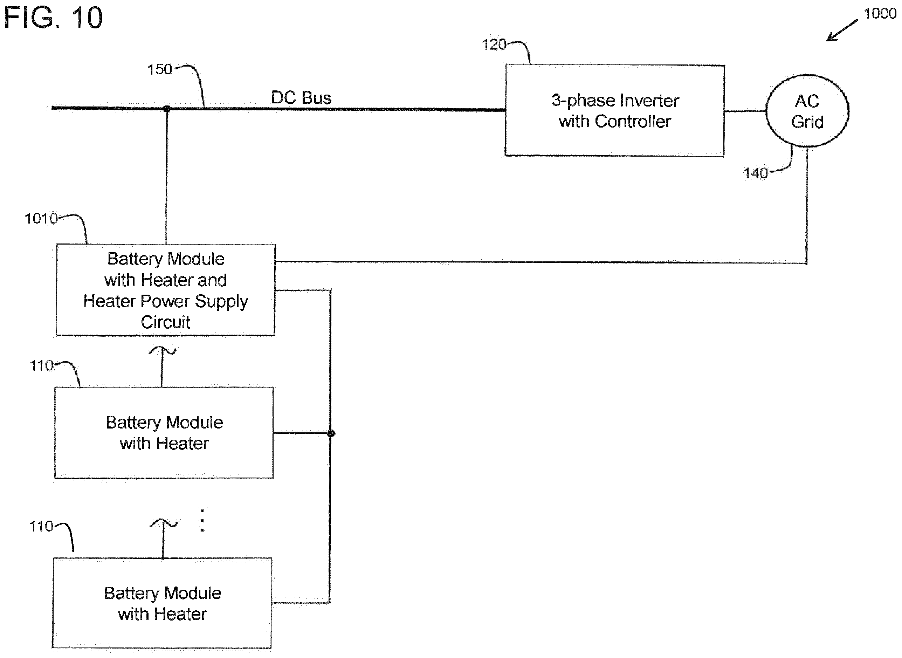

FIG. 10 is an illustration of a block diagram of a sixth embodiment of a system 1000 providing power to a heater of each of a plurality of battery modules 1010 and 110. A first battery module 1010 of the plurality of battery modules includes a single heater power supply circuit. The other battery modules 110 of the plurality of battery modules do not include a heater power supply circuit. The single heater power supply circuit of battery module 1010 drives the heater of not only battery module 1010 but also the heaters of the other battery modules 110. For example, the single heater power supply circuit of battery module 1010 may be very similar to the heater power supply circuit 130 but may have electrical components capable of handling higher current levels to drive the heaters of additional battery modules 110. The system 1000 of FIG. 10 allows for one unique battery module 1010 to accommodate multiple common battery modules 110.

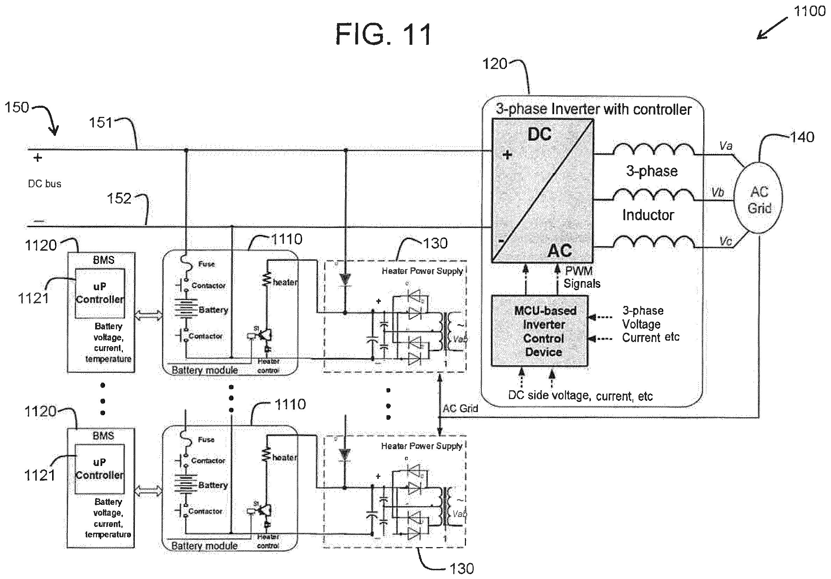

FIG. 11 is an electrical schematic illustration of an embodiment of a system 1100 for providing power to heaters of a plurality of battery modules 1110. The battery modules 1110 are similar to the battery modules 110 herein except that the battery modules 1110 do not include a controller for controlling the heater of a battery module. A dedicated heater power supply circuit 130 and a dedicated BMS 1120 is provided for each battery module 1110. Each dedicated BMS 1120 includes a controller 1121 for controlling the heater of each corresponding battery module 1110 (i.e., to control the turning on and turning off of the heater).

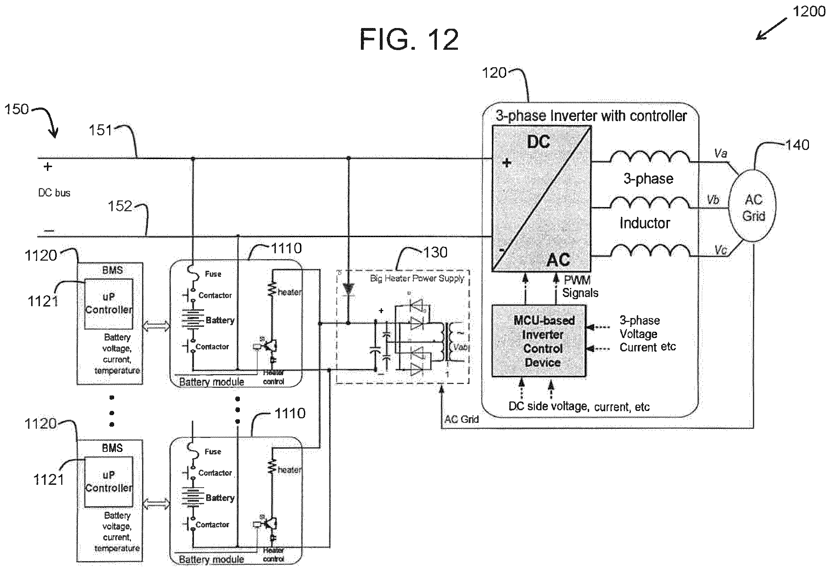

FIG. 12 is an electrical schematic illustration of a first alternate embodiment of a system 1200 for providing power to heaters of a plurality of battery modules 1110. A dedicated BMS 1120 is provided for each battery module 1110 and a single common battery heater power supply circuit 130 is provided to drive the heaters of all the battery modules 1110. Again, each dedicated BMS 1120 includes a controller 1121 for controlling the heater of each corresponding battery module 1110.

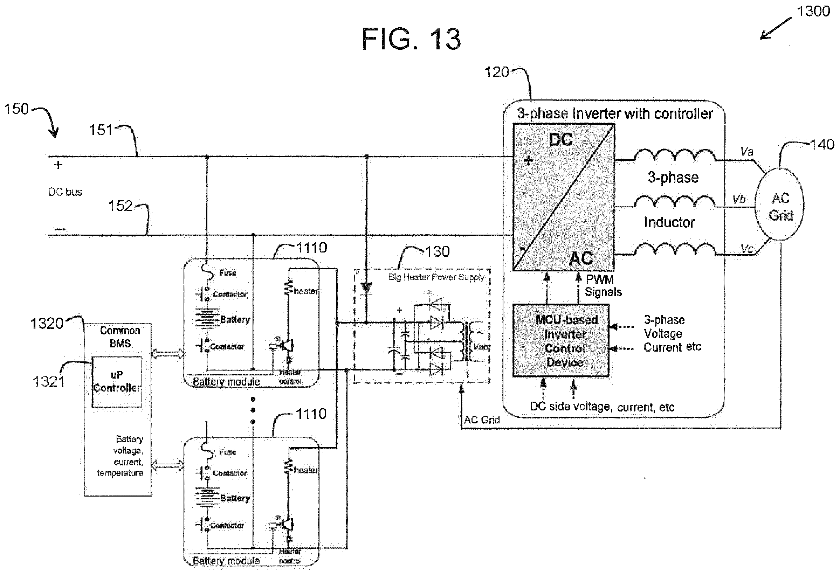

FIG. 13 is an electrical schematic illustration of a second alternate embodiment of a system 1300 for providing power to heaters of a plurality of battery modules. A single common BMS 1320 is provided to control all of the battery modules 1110, and a single common heater power supply circuit 130 is provided to drive the heaters of all the battery modules 1110. The single common BMS 1320 includes a common controller 1321 for controlling the heaters of all the battery modules 1110.

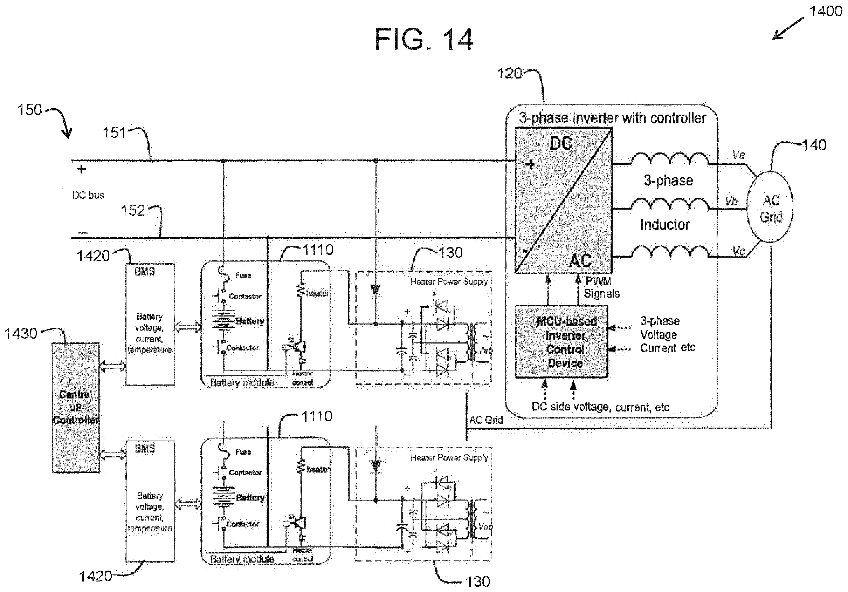

FIG. 14 is an electrical schematic illustration of a third alternate embodiment of a system 1400 for providing power to heaters of a plurality of battery modules 1110. A dedicated heater power supply circuit 130 is provided for each battery module 1110, and a dedicated BMS 1420 is provided for each battery module 1110. Furthermore, a common master controller 1430 for controlling the heater of each battery module 1110 via a corresponding BMS 1420 is provided, instead of having a controller for controlling the heaters in each BMS.

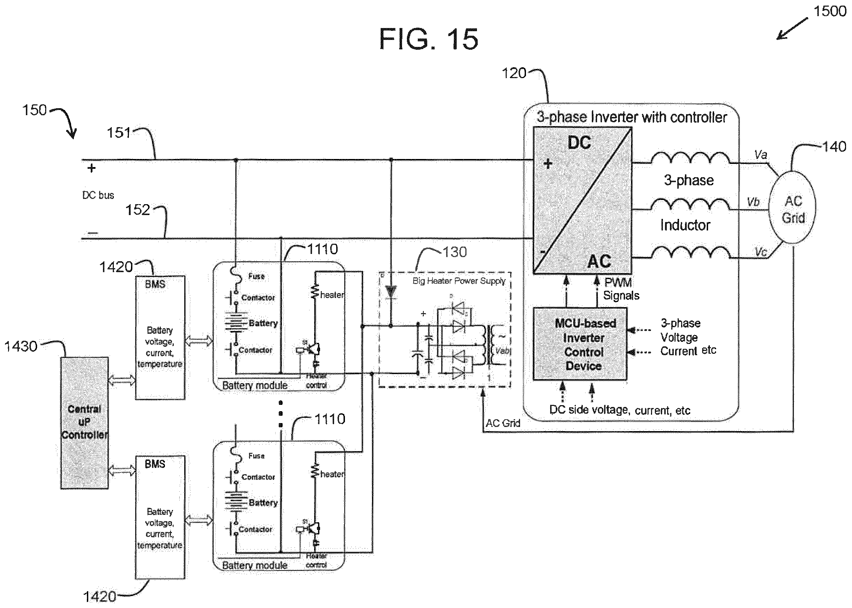

FIG. 15 is an electrical schematic illustration of a fourth alternate embodiment of a system 1500 for providing power to heaters of a plurality of battery modules 1110. A single common heater power supply circuit 130 is provided to drive the heaters of all the battery modules 1110, and a dedicated BMS 1420 is provided for each battery module 1110. Furthermore, a common master controller 1430 for controlling the heater of each battery module 1110 via a corresponding BMS 1420 is provided.

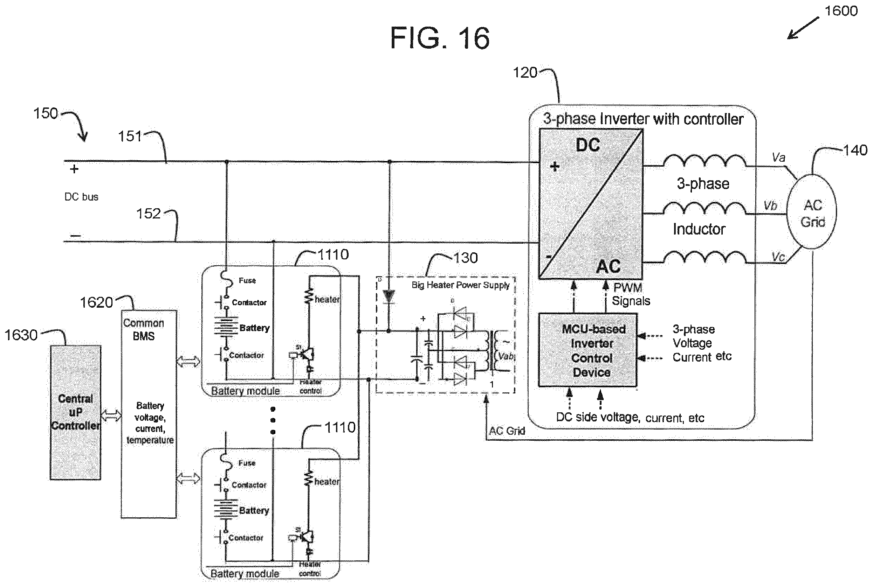

FIG. 16 is an electrical schematic illustration of a fifth alternate embodiment of a system 1600 for providing power to heaters of a plurality of battery modules 1110. A single common heater power supply circuit 130 is provided to drive the heaters of all the battery modules 1110, and a single common BMS 1620 is provided to control all the battery modules 1110. Furthermore, a common master controller 1630 for controlling the heater of each battery module 1110 via the common BMS 1520 is provided.

In one embodiment, a power supply circuit is provided that is a combined AC/DC heater power supply circuit configured to provide a complete and real solution to the heater start-up issue as well as the AC grid outage problem. The power supply circuit includes a first circuit portion operable to convert AC electrical power, provided by an AC source, to a first DC electrical power. The power supply circuit also includes a second circuit portion operable to output a second DC electrical power derived from a DC bus operably connected to at least one DC source. The first circuit portion and the second circuit portion are operably connected and configured to provide either the first DC electrical power or the second DC electrical power to a heater circuit of a battery module in dependence on a voltage level associated with the first circuit portion relative to a voltage level associated with the second circuit portion. The first DC electrical power may be provided to the heater circuit when the voltage level associated with the first circuit portion is higher than the voltage level associated with the second circuit portion. The second DC electrical power may be provided to the heater circuit when the voltage level associated with the first circuit portion is lower than the voltage level associated with the second circuit portion. The first circuit portion may include a rectifier circuit and the second circuit portion may include a diode. In accordance with an embodiment, the first circuit portion and the second circuit portion are configured to provide either the first DC electrical power or the second DC electrical power to drive the heater circuit in a battery module in dependence on a DC voltage level output by the first circuit portion relative to a DC voltage level of the DC bus. The power supply circuit may not employ executable software instructions to provide either the first DC electrical power or the second DC electrical power to the heater circuit of a battery module in dependence on a voltage level associated with the first circuit portion relative to a voltage level associated with the second circuit portion. Instead, the first circuit portion and the second circuit portion may be non-programmable, analog circuit portions.

In one embodiment, a system is provided for supplying power to heat a plurality of battery modules. The system includes a plurality of battery modules and a plurality of the power supply circuits described above herein. Each battery module of the plurality of battery modules is associated with one power supply circuit of the plurality of power supply circuits. Each power supply circuit of the plurality of power supply circuits is configured to provide either the first DC electrical power or the second DC electrical power to a heater circuit in an associated battery module in dependence on a voltage level associated with the first circuit portion of the power supply circuit relative to a voltage level associated with the second circuit portion of the power supply circuit. The system may also include a plurality of battery management systems, where each battery module of the plurality of battery modules is associated with one battery management system of the plurality of battery management systems, and where each battery management system of the plurality of battery management systems includes one power supply circuit of the plurality of power supply circuits. Alternatively, each battery module of the plurality of battery modules may include an associated power supply circuit of the plurality of power supply circuits. In accordance with various embodiments, the plurality of power supply circuits may be external to the plurality of battery modules.

In one embodiment, a system is provided for supplying power to heat a plurality of battery modules. The system includes a plurality of battery modules and at least one heater power supply circuit as described above herein and configured to provide either the first DC electrical power or the second DC electrical power to a heater circuit of each of the plurality of battery modules in dependence on a voltage level associated with the first circuit portion of the at least one power supply circuit relative to a voltage level associated with the second circuit portion of the at least one power supply circuit. The system may also include a master controller configured to control the plurality of battery modules, wherein the master controller includes the at least one power supply circuit. In accordance with an embodiment, the at least one power supply circuit is external to the plurality of battery modules. In accordance with another embodiment, the at least one power supply circuit is internal to at least one battery module of the plurality of battery modules.

In one embodiment, a method is provided for powering at least one battery module. The method includes inputting a first DC electrical signal derived from an AC source, inputting a second DC electrical signal derived from a DC source, and powering a heater of at least one battery module with either the first DC electrical signal or the second DC electrical signal in dependence on a DC voltage level of the first DC electrical signal relative to a DC voltage level of the second DC electrical signal. The first DC electrical signal may be used to power the heater when the DC voltage level of the first DC electrical signal is higher than the DC voltage level of the second DC electrical signal. The second DC electrical signal may be used to power the heater when the DC voltage level of the first DC electrical signal is lower than the DC voltage level of the second DC electrical signal. The first DC electrical signal may be derived from the AC source by an AC-to-DC rectifier circuit operatively connected to the AC source, and the second DC electrical signal may be derived from the DC source by a diode operatively connected to the DC source, in accordance with an embodiment. The AC source may include an AC grid and the DC source may include a DC bus.

In summary, systems and methods for supplying power to a battery heater in one or more battery modules are disclosed. A first DC electrical signal derived from an AC source or a second DC electrical signal derived from a DC bus is used to power a battery heater of one or more battery modules in dependence on a voltage level associated with the first DC electrical signal relative to a voltage level of the second DC electrical signal.

In appended claims, the terms "including" and "having" are used as the plain language equivalents of the term "comprising"; the term "in which" is equivalent to "wherein." Moreover, in appended claims, the terms "first," "second," "third," "upper," "lower," "bottom," "top," etc. are used merely as labels, and are not intended to impose numerical or positional requirements on their objects. Further, the limitations of the appended claims are not written in means-plus-function format and are not intended to be interpreted based on 35 U.S.C. § 112, sixth paragraph, unless and until such claim limitations expressly use the phrase "means for" followed by a statement of function void of further structure. As used herein, an element or step recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising," "including," or "having" an element or a plurality of elements having a particular property may include additional such elements not having that property. Moreover, certain embodiments may be shown as having like or similar elements, however, this is merely for illustration purposes, and such embodiments need not necessarily have the same elements unless specified in the claims.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be."

This written description uses examples to disclose the invention, including the best mode, and also to enable one of ordinary skill in the art to practice the invention, including making and using any devices or systems and performing any incorporated methods. The patentable scope of the invention is defined by the claims, and may include other examples that occur to one of ordinary skill in the art. Such other examples are intended to be within the scope of the claims if they have structural elements that do not differentiate from the literal language of the claims, or if they include equivalent structural elements with insubstantial differences from the literal language of the claims.

## Claims

1. A power supply circuit (130), comprising:
a first circuit portion (133) operable to convert AC electrical power, provided by an AC source (140), to a first DC electrical power; and
a second circuit portion (137) operable to output a second DC electrical power derived from a DC bus (150) operably connected to at least one DC source,
wherein the first circuit portion (133) and the second circuit portion (137) are operably connected and configured to provide either the first DC electrical power or the second DC electrical power to a heater circuit (310) of a battery module (110) in dependence on a DC voltage level associated with the first circuit portion (133) relative to a DC voltage level associated with the second circuit portion (137); **characterized in that**
the first circuit portion (133) and the second circuit portion (137) are connected to each other and the heater (310) and the second circuit portion (137) includes a diode;
wherein if the DC voltage level output by the first circuit portion (133) is higher than the DC voltage level at the input of the second circuit portion (137), the electrical current to the heater (310) is provided from the AC source (140) via the first circuit portion (133) and if the DC voltage level output by the first circuit portion (133) is lower than the DC voltage level at the input of the second circuit portion (137), the diode (137) is forward biased and electrical current to the heater (310) is automatically provided from the DC bus (150) via the diode (137).

2. The power supply circuit according to claim 1, wherein the first circuit portion (133) includes a rectifier circuit (133).

3. The power supply circuit according to claim 1 or claim 2, wherein the power supply circuit (130) does not employ executable software instructions to provide either the first DC electrical power or the second DC electrical power to the heater circuit (310) of the battery module (110) in dependence on the voltage level associated with the first circuit portion (133) relative to the voltage level associated with the second circuit portion (137).

4. The power supply circuit according to any preceding claim, wherein the first circuit portion (133) and the second circuit portion (137) are non-programmable, analog circuit portions.

5. A system comprising:
a plurality of battery modules (110); and
at least one power supply circuit (830) of any preceding claim, where the at least one power supply circuit (830) is configured to provide either the first DC electrical power or the second DC electrical power to a heater circuit (310) of each of the plurality of battery modules (110) in dependence on a voltage level associated with the first circuit portion (133) of the at least one power supply circuit (130) relative to a voltage level associated with the second circuit portion (137) of the at least one power supply circuit (130).

6. The system according to claim 5, further comprising a master controller (910) configured to control the plurality of battery modules (110), wherein the master controller (910) includes the at least one power supply circuit (130).

7. The system according to claim 5 or claim 6, wherein the at least one power supply circuit (830) is external to the plurality of battery modules (110).

8. The system according to claim 5, 6 or 7, wherein the at least one power supply circuit (130) is internal to at least one battery module (1010) of the plurality of battery modules.

9. The system according to any one of claims 5 to 8 comprising a plurality of the power supply circuits (130), where each battery module (110) of the plurality of battery modules is associated with one power supply circuit (130) of the plurality of power supply circuits, and where each power supply circuit (130) of the plurality of power supply circuits is configured to provide either the first DC electrical power or the second DC electrical power to a heater circuit (310) in an associated battery module (110) in dependence on a voltage level associated with the first circuit portion (133) of the power supply circuit (130) relative to a voltage level associated with the second circuit portion (137) of the power supply circuit (130).

10. The system according to claim 9, further comprising a plurality of battery management systems (610), where each battery module (110) of the plurality of battery modules is associated with one battery management system (610) of the plurality of battery management systems, and where each battery management system (610) of the plurality of battery management systems includes one power supply circuit (130) of the plurality of power supply circuits.

11. A method comprising:
inputting a first DC electrical signal derived from an AC source;
inputting a second DC electrical signal derived from a DC source; and
powering a heater of at least one battery module with either the first DC electrical signal or the second DC electrical signal in dependence on a DC voltage level of the first DC electrical signal relative to a DC voltage level of the second DC electrical signal;
wherein the first DC electrical signal or the second DC electrical signal are operably connected and configured to provide either the first DC electrical signal or the second DC electrical signal to a heater circuit (310) of at least one battery module (110) in dependence on a DC voltage level associated with the first DC electrical signal relative to a DC voltage level associated with the second DC electrical signal
wherein the first DC electrical signal or the second DC electrical signal are provided by a first circuit portion (133) and a second circuit portion (137), connected to each other and the heater, the second circuit portion (137) including a diode (137); and
wherein if the DC voltage level output by the first circuit portion (133) is higher than the DC voltage level at the input of the second circuit portion (137), providing the electrical current to the heater (310) from the AC source (140) via the first circuit portion (133) and if the DC voltage level output by the first circuit portion (133) is lower than the DC voltage level at the input of the second circuit portion (137), automatically providing electrical current to the heater (310) is from the DC bus (150) via the diode (137).

12. The method according to claim 11, wherein at least one of:
the first DC electrical signal is used to power the heater when the DC voltage level of the first DC electrical signal is higher than the DC voltage level of the second DC electrical signal;
the second DC electrical signal is used to power the heater when the DC voltage level of the first DC electrical signal is lower than the DC voltage level of the second DC electrical signal;
the first DC electrical signal is derived from the AC source by an AC-to-DC rectifier circuit operatively connected to the AC source, and wherein the second DC electrical signal is derived from the DC source by a diode operatively connected to the DC source, and
the AC source includes an AC grid, and wherein the DC source includes a DC bus.

## Patentansprüche

1. Leistungsversorgungskreis (130), umfassend:
einen ersten Kreisabschnitt (133), der zum Umformen von elektrischer WS-Leistung, die durch eine WS-Quelle (140) vorgesehen ist, zu einer ersten elektrischen GS-Leistung betriebsfähig ist; und
einen zweiten Kreisabschnitt (137), der zum Ausgeben einer zweiten elektrischen GS-Leistung betriebsfähig ist, die von einem GS-Bus (150) abgeleitet ist, welcher betriebsfähig mit zumindest einer GS-Quelle verbunden ist,
wobei der erste Kreisabschnitt (133) und der zweite Kreisabschnitt (137) betriebsfähig verbunden sind und zum Zuführen von entweder der ersten elektrischen GS-Leistung oder der zweiten elektrischen GS-Leistung zu einem Heizerkreis (310) eines Batteriemoduls (110) in Abhängigkeit von einem GS-Spannungspegel, der dem ersten Kreisabschnitt (133) zugeordnet ist, bezüglich eines GS-Spannungspegels, der dem zweiten Kreisabschnitt (137) zugeordnet ist, konfiguriert sind; **dadurch gekennzeichnet, dass**
der erste Kreisabschnitt (133) und der zweite Kreisabschnitt (137) miteinander und dem Heizer (310) verbunden sind und der zweite Kreisabschnitt (137) eine Diode enthält;
wobei, wenn der GS-Spannungspegel, der durch den ersten Kreisabschnitt (133) ausgegeben wird, höher als der GS-Spannungspegel am Eingang des zweiten Kreisabschnitts (137) ist, der elektrische Strom zum Heizer (310) von der WS-Quelle (140) über den ersten Kreisabschnitt (133) zugeführt wird, und, wenn der GS-Spannungspegel, der durch den ersten Kreisabschnitt (133) ausgegeben wird, niedriger als der GS-Spannungspegel am Eingang des zweiten Kreisabschnitts (137) ist, die Diode (137) vorgespannt wird und elektrischer Strom zum Heizer (310) automatisch vom GS-Bus (150) über die Diode (137) zugeführt wird.

2. Leistungsversorgungskreis nach Anspruch 1, wobei der erste Kreisabschnitt (133) einen Gleichrichterkreis (133) enthält.

3. Leistungsversorgungskreis nach einem der Ansprüche 1 oder 2, wobei der Leistungsversorgungskreis (130) keine ausführbaren Softwareanweisungen zum Zuführen von entweder der ersten elektrischen GS-Leistung oder der zweiten elektrischen GS-Leistung zum Heizerkreis (310) des Batteriemoduls (110) in Abhängigkeit vom Spannungspegel, der dem ersten Kreisabschnitt (133) zugeordnet ist, bezüglich des Spannungspegels, der dem zweiten Kreisabschnitt (137) zugeordnet ist, einsetzt.

4. Leistungsversorgungskreis nach einem der vorhergehenden Ansprüche, wobei der erste Kreisabschnitt (133) und der zweite Kreisabschnitt (137) nichtprogrammierbare, analoge Kreisabschnitte sind.

5. System, umfassend:
mehrere Batteriemodule (110); und
zumindest einen Leistungsversorgungskreis (830) gemäß einem der vorhergehenden Ansprüche, wobei der zumindest eine Leistungsversorgungskreis (830) zum Zuführen von entweder der ersten elektrischen GS-Leistung oder der zweiten elektrischen GS-Leistung zu einem Heizerkreis (310) von jedem der mehreren Batteriemodule (110) in Abhängigkeit von einem Spannungspegel, der dem ersten Kreisabschnitt (133) des zumindest einen Leistungsversorgungskreises (130) zugeordnet ist, bezüglich eines Spannungspegels, der dem zweiten Kreisabschnitt (137) des zumindest einen Leistungsversorgungskreises (130) zugeordnet ist, konfiguriert ist.

6. System nach Anspruch 5, ferner umfassend eine Master-Steuerung (910), die zum Steuern der mehreren Batteriemodule (110) konfiguriert ist, wobei die Master-Steuerung (910) den zumindest einen Leistungsversorgungskreis (130) enthält.

7. System nach einem der Ansprüche 5 oder 6, wobei der zumindest eine Leistungsversorgungskreis (830) extern zu den mehreren Batteriemodulen (110) ist.

8. System nach einem der Ansprüche 5, 6 oder 7, wobei der zumindest eine Leistungsversorgungskreis (130) intern zu zumindest einem Batteriemodul (1010) der mehreren Batteriemodule ist.

9. System nach einem der Ansprüche 5 bis 8, umfassend mehrere der Leistungsversorgungskreise (130), wobei jedes Batteriemodul (110) der mehreren Batteriemodule einem Leistungsversorgungskreis (130) der mehreren Leistungsversorgungskreise (130) zugeordnet ist, und wobei jeder Leistungsversorgungskreis der mehreren Leistungsversorgungskreise zum Zuführen von entweder der ersten elektrischen GS-Leistung oder der zweiten elektrischen GS-Leistung zu einem Heizerkreis (310) in einem zugeordneten Batteriemodul (110) in Abhängigkeit von einem Spannungspegel, der dem ersten Kreisabschnitt (133) des Leistungsversorgungskreises (130) zugeordnet ist, bezüglich eines Spannungspegels, der dem zweiten Kreisabschnitt (137) des Leistungsversorgungskreises (130) zugeordnet ist, konfiguriert ist.

10. System nach Anspruch 9, ferner umfassend mehrere Batterieverwaltungssysteme (610), wobei jedes Batteriemodul (110) der mehreren Batteriemodule einem Batterieverwaltungssystem (610) der mehreren Batterieverwaltungssysteme zugeordnet ist, und wobei jedes Batterieverwaltungssystem (610) der mehreren Batterieverwaltungssysteme einen Leistungsversorgungskreis (130) der mehreren Leistungsversorgungskreise enthält.

11. Verfahren, umfassend:
Eingeben eines ersten elektrischen GS-Signals, das von einer WS-Quelle abgeleitet wird;
Eingeben eines zweiten elektrischen GS-Signals, das von einer GS-Quelle abgeleitet wird; und
Versorgen eines Heizers von zumindest einem Batteriemodul mit entweder dem ersten elektrischen GS-Signal oder dem zweiten elektrischen GS-Signal in Abhängigkeit von einem GS-Spannungspegel des ersten elektrischen GS-Signals bezüglich eines GS-Spannungsreglers des zweiten elektrischen GS-Signals;
wobei das erste elektrische GS-Signal oder das zweite elektrische GS-Signal betriebsfähig verbunden werden und zum Zuführen von entweder dem ersten elektrischen GS-Signals oder des zweiten elektrischen GS-Signals zu einem Heizerkreis (310) von zumindest einem Batteriemodul (110) in Abhängigkeit von einem GS-Spannungspegel, der dem ersten elektrischen GS-Signal zugeordnet ist, bezüglich eines GS-Spannungspegels, der dem zweiten elektrischen GS-Signal zugeordnet ist, konfiguriert sind;
wobei das erste elektrische GS-Signal oder das zweite elektrische GS-Signal durch einen ersten Kreisabschnitt (133) und einen zweiten Kreisabschnitt (137) zugeführt wird, die miteinander und dem Heizer verbunden sind, wobei der zweite Kreisabschnitt (137) eine Diode (137) enthält; und
wobei, wenn der GS-Spannungspegel, der durch den ersten Kreisabschnitt (133) ausgegeben wird, höher als der GS-Spannungspegel am Eingang des zweiten Kreisabschnitts (137) ist, Zuführen des elektrischen Stroms zum Heizer (310) von der WS-Quelle (140) über den ersten Kreisabschnitt (133), und, wenn der GS-Spannungspegel, der durch den ersten Kreisabschnitt (133) ausgegeben wird, niedriger als der GS-Spannungspegel am Eingang des zweiten Kreisabschnitts (137) ist, automatisches Zuführen von elektrischem Strom zum Heizer (310) vom GS-Bus (150) über die Diode (137).

12. Verfahren nach Anspruch 11, wobei zumindest eines von folgendem zutrifft:
das erste elektrische GS-Signal wird zum Versorgen des Heizers benutzt, wenn der GS-Spannungspegel des ersten elektrischen GS-Signals höher als der GS-Spannungspegel des zweiten elektrischen GS-Signals ist;
das zweite elektrische GS-Signal wird zum Versorgen des Heizers benutzt, wenn der GS-Spannungspegel des ersten elektrischen GS-Signals niedriger als der GS-Spannungspegel des zweiten elektrischen GS-Signals ist;
das erste elektrische GS-Signal wird von der WS-Quelle durch einen WS/GS-Gleichrichterkreis abgeleitet, der betriebsfähig mit der WS-Quelle verbunden ist, und wobei das zweite elektrische GS-Signal von der GS-Quelle durch eine Diode abgeleitet wird, die betriebsfähig mit der GS-Quelle verbunden ist, und
die WS-Quelle enthält ein WS-Versorgungsnetz, und wobei die GS-Quelle einen GS-Bus enthält.

## Revendications

1. Circuit d'alimentation en énergie (130) comprenant :
une première partie de circuit (133) qui est à même de convertir de l'énergie électrique CA, fournie par une source CA (140), en une première énergie électrique CC ; et
un seconde partie de circuit (137) qui est à même de délivrer une seconde énergie électrique CC tirée d'une barre omnibus CC (150) connectée en service à au moins une source CC,
dans lequel la première partie de circuit (133) et la seconde partie de circuit (137) sont connectées et configurées en service pour fournir la première énergie électrique CC et la seconde énergie électrique CC à un circuit de chauffage (310) d'un module de batterie (110) en fonction d'un niveau de tension CC associé à la première partie de circuit (133) par rapport à un niveau de tension CC associé à la seconde partie de circuit (137) ;
**caractérisé en ce que** :
la première partie de circuit (133) et la seconde partie de circuit (137) sont connectées l'une à l'autre et au dispositif de chauffage (310) et la seconde partie de circuit (137) comprend une diode ;
dans lequel, si le niveau de tension CC délivré par la première partie de circuit (133) est plus élevé que le niveau de tension CC à l'entrée de la seconde partie de circuit (137), le courant électrique fourni au dispositif de chauffage (310) est fourni par la source CA (140) via la première partie de circuit (133) et, si le niveau de tension CC délivré par la première partie de circuit (133) est inférieur au niveau de tension CC à l'entrée de la seconde partie de circuit (137), la diode (137) est polarisée en sens direct et le courant électrique fourni au dispositif de chauffage (310) est automatiquement fourni par la barre omnibus CC (150) via la diode (137).

2. Circuit d'alimentation en énergie selon la revendication 1, dans lequel la première partie de circuit (133) comprend un circuit redresseur (133).

3. Circuit d'alimentation en énergie selon la revendication 1 ou la revendication 2, dans lequel le circuit d'alimentation en énergie (130) n'utilise pas d'instructions logicielles exécutables pour fournir la première énergie électrique CC ou la seconde énergie électrique CC au circuit de chauffage (310) du module de batterie (110) en fonction du niveau de tension associé à la première partie de circuit (133) par rapport au niveau de tension associé à la seconde partie de circuit (137).

4. Circuit d'alimentation en énergie selon l'une quelconque des revendications précédentes, dans lequel la première partie de circuit (133) et la seconde partie de circuit (137) sont des parties de circuit analogiques non programmables.

5. Système comprenant :
une pluralité de modules de batterie (110) ; et
au moins un circuit d'alimentation en énergie (830) selon l'une quelconque des revendications précédentes, dans lequel le au moins un circuit d'alimentation en énergie (830) est configuré pour fournir la première énergie électrique CC ou la seconde énergie électrique CC à un circuit de chauffage (310) de chacun de la pluralité de modules de batterie (110) en fonction d'un niveau de tension associé à la première partie de circuit (133) du au moins un circuit d'alimentation en énergie (130) par rapport à un niveau de tension associé à la seconde partie de circuit (137) du au moins un circuit d'alimentation en énergie (130).

6. Système selon la revendication 5, comprenant en outre un dispositif de commande maître (910) configuré pour commander la pluralité de modules de batterie (110), dans lequel le dispositif de commande maître (910) comprend le au moins un circuit d'alimentation en énergie (130).

7. Système selon la revendication 5 ou la revendication 6, dans lequel le au moins un circuit d'alimentation en énergie (830) est extérieur à la pluralité de modules de batterie (110).

8. Système selon la revendication 5, 6 ou 7, dans lequel le au moins un circuit d'alimentation en énergie (130) est interne a au moins un module de batterie (1010) de la pluralité de modules de batterie.

9. Système selon l'une quelconque des revendications 5 à 8 comprenant une pluralité des circuits d'alimentation en énergie (130), dans lequel chaque module de batterie (110) de la pluralité de modules de batterie est associé à un circuit d'alimentation en énergie (130) de la pluralité de circuits d'alimentation en énergie et dans lequel chaque circuit d'alimentation en énergie (130) de la pluralité de circuits d'alimentation en énergie est configuré pour fournir la première énergie électrique CC ou la seconde énergie électrique CC à un circuit de chauffage (310) dans un module de batterie associé (110) en fonction d'un niveau de tension associé à la première partie de circuit (133) du circuit d'alimentation en énergie (130) par rapport à un tension associé à la seconde partie de circuit (137) du circuit d'alimentation en énergie (130).

10. Système selon la revendication 9, comprenant en outre une pluralité de systèmes de gestion de batterie (610), dans lequel chaque module de batterie (110) de la pluralité de modules de batterie est associé à un système de gestion de batterie (610) de la pluralité de systèmes de gestion de batterie et dans lequel chaque système de gestion de batterie (610) de la pluralité de systèmes de gestion de batterie comprend un circuit d'alimentation en énergie (130) de la pluralité de circuits d'alimentation en énergie.

11. Procédé comprenant :
la saisie d'un premier signal électrique CC tiré d'une source CA ;
la saisie d'un second signal électrique CC tiré d'une source CC ; et
l'alimentation d'un dispositif de chauffage d'au moins un module de batterie avec le premier signal électrique CC ou le second signal électrique CC en fonction d'un niveau de tension CC du premier signal électrique CC par rapport à un niveau de tension CC du second signal électrique CC ;
dans lequel le premier signal électrique CC ou le second signal électrique CC est connecté et configuré en service pour fournir le premier signal électrique CC ou le second signal électrique CC à un circuit de chauffage (310) d'au moins un module de batterie (110) en fonction d'un niveau de tension CC associé au premier signal électrique CC par rapport à un niveau de tension CC associé au second signal électrique CC ;
dans lequel le premier signal électrique CC ou le second signal électrique CC est fourni par une première partie de circuit (133) et une seconde partie de circuit (137) connectées l'une à l'autre et au dispositif de chauffage, la seconde partie de circuit (137) comprenant une diode (137) ; et
dans lequel, si le niveau de tension CC délivré par la première partie de circuit (133) est plus élevé que le niveau de tension CC à l'entrée de la seconde partie de circuit (137), la fourniture du courant électrique au dispositif de chauffage (310) à partir de la source CA (140) via la première partie de circuit (133) et si le niveau de tension CC délivré par la première partie de circuit (133) est inférieur au niveau de tension CC à l'entrée de la seconde partie de circuit (137), la fourniture automatique de courant électrique au dispositif de chauffage (310) se fait par la barre omnibus CC (150) via la diode (137).

12. Procédé selon la revendication 11, dans lequel au moins l'un des cas suivants s'applique :
le premier signal électrique CC est utilisé pour alimenter le dispositif de chauffage lorsque le niveau de tension CC du premier signal électrique CC est plus élevé que le niveau de tension CC du second signal électrique CC ;
le second signal électrique CC est utilisé pour alimenter le dispositif de chauffage lorsque le niveau de tension CC du premier signal électrique CC est inférieur au signal de tension CC du second signal électrique CC ;
le premier signal électrique CC est tiré de la source CA par un circuit redresseur CA-CC connecté en service à la source CA et dans lequel le second signal électrique CC est tiré de la source CC par une diode connectée en service à la source CC et
la source CA comprend une grille CA et dans lequel la source CC comprend une barre omni bus CC.
